Europäisches Patentamt

(19) European Patent Office

Office européen des brevets

(11) Publication number: **0 014 563**
**B1**

(12) **EUROPEAN PATENT SPECIFICATION**

(45) Date of publication of patent specification: **13.07.83**

(21) Application number: **80300276.5**

(22) Date of filing: **30.01.80**

(51) Int. Cl.³: **B 23 Q 35/12,**
**B 23 Q 15/00,**
**G 05 B 19/18, G 05 D 3/00**

(54) Tracer control apparatus for, and a method of machining in, a tracer machining system.

(30) Priority: **31.01.79 JP 10228/79**

(43) Date of publication of application:
**20.08.80 Bulletin 80/17**

(45) Publication of the grant of the patent:
**13.07.83 Bulletin 83/28**

(84) Designated Contracting States:
**DE FR GB**

(56) References cited:
**DE - A - 2 317 073**
**DE - A - 2 847 027**
**DE - B - 2 234 518**
**US - A - 3 609 322**
**US - A - 3 684 873**
**US - A - 3 764 877**

(73) Proprietor: **Fanuc Ltd**
**5-1, Asahigaoka, 3-chome**
**Hino-shi, Tokyo 191 (JP)**

(72) Inventor: **Imazeki, Ryoji**
**No. 987-44 Naganuma-cho**
**Hachioji-shi Tokyo (JP)**
Inventor: **Yamazaki, Etuo**
**No. 566-93 Shimoongata-cho**
**Hachioji-shi Tokyo (JP)**
Inventor: **Sasaki, Takao**
**No. 469-4, Kobiki-cho Hachioji-shi**
**Tokyo Esuteito Hachioji 2-502 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England

Tracer Control Apparatus For, And A Method Of Machining In, A Tracer
Machining System.

This invention relates to tracer control apparatus.

When tracer machining it is general practice in conventional profile working to set up a clamp level and carry out tracing until the tracer head tracing the model surface reaches the clamp level, and then to perform clamping feed, thereby to prevent excessive working of a workpiece (e.g. excessive depth of cut). A clamping feed is a feed carried out at a predetermined machining level, corresponding to the clamp level. Repeated tracings are carried out and the clamp level is changed after each tracing. Eventually profile working in a clamping feed area is completed after a plurality of tracings have been effected.

In such conventional profile working, when clamping feed is required at a plurality of areas over a tracing area, profile working involves a plurality of tracings not only at those areas but at non-clamping feed areas also, resulting in the profile working involving a waste of time.

United States Patent No. 4,064,445 discloses a tracer machining system having "plateau level control". The system is operable to effect tracing by tracing feeds and pick feeds and to effect "plateau" tracing at a preset "plateau" level corresponding to a "virtual" pattern surface. In "plateau" tracing the tracer head is fed at the preset "plateau level" and does not trace the model surface.

West German Offenlegungsschrift No. 2,317,073 discloses a program controlled machine tool which is operable to repeat a particular part of the program if a maximum feed during that part of the program is exceeded.

According to the present invention there is provided a tracer control apparatus, for a tracer machining system operable to effect tracing by tracing feeds and pick feeds and to effect clamping feeds at a preset clamping level, characterised by

memory means for storing a first position along the pick feed axis, which position corresponds to the first of a succession of tracing feeds in the course of each of which clamping feed is effected in an initial tracing, and for storing a second position along the pick feed axis, which position corresponds to a tracing feed, following next after the last tracing feed of the succession, in the course of which clamping feed is not effected.

means operable in dependence upon the first and second positions as stored in the memory means to cause tracing between the first and second positions to be repeated, back and forth between those positions, and

clamping level setting means for setting an initial clamping level in respect of the initial tracing from the first to the second position, and for changing the clamping level for respective subsequent repeat tracings between the first and second positions until, in such a repeat tracing, clamping feed is not effected at the changed clamping level set for that tracing or a limit clamping level value is reached, whereafter the initial clamping level is set once more, and tracing proceeds beyond the second position.

According to the present invention there is also provided a method of machining in a tracer machining system that is operable to effect tracing by tracing feeds and pick feeds and to effect clamping feeds at a preset clamping level, characterised in that the method comprises:

in an initial tracing, storing a first position along the pick feed axis which position corresponds to the first tracing feed of a succession of tracing feeds in which clamping feed is effected and storing a second position along the pick feed axis which position corresponds to a tracing feed, following next after the last tracing feed of the succession, in the course of which clamping feed is not effected.

in dependence upon the stored positions, executing repeat tracings back and forth between those positions,

in respective such repeat tracings after the initial tracing, changing the clamping level from an initial clamping level value applicable to the initial tracing, until in such a repeat tracing clamping feed is not effected at the changed clamping level set for that tracing or a limit clamping level value is reached,

then, setting the initial clamping level once more and tracing beyond the second position.

The present invention can provide for machining with clamping tracer control such that profile working is effected a plurality of times only in clamp tracing areas, with sequential alteration of clamp level, thereby to enhance profile working efficiency.

Briefly, in this invention, tracing machining feed is temporarily halted and clamping feed effected when the tracer head tracing a model surface has reached a clamp level, tracer control is then repeatedly performed between the position on the pick feed axis where the clamping feed is carried out first and the position on pick feed axis where clamping feed is no longer performed during tracing feed, with the clamp level changed in a sequential order in each tracing repeat. When the clamping feed comes to an end, clamp level is set to its initial value to permit tracing to proceed to a next area on the model surface.

Reference will now be made, by way of example, to the accompanying drawings, in which:—

Fig. 1 is a schematic diagram explanatory of a tracing path followed during tracer operations;

Fig. 2 is a schematic diagram illustrating in cross-section a profile encountered along the tracing path of Figure 1, for assistance in explanation of a clamp level;

Fig. 3 is a schematic block diagram illustrating apparatus embodying the present invention;

Fig. 4 is a schematic block diagram illustrating an example of a memory for use in apparatus embodying this invention; and

Fig. 5 is a schematic block diagram illustrating an example of a discriminator for use in apparatus embodying this invention.

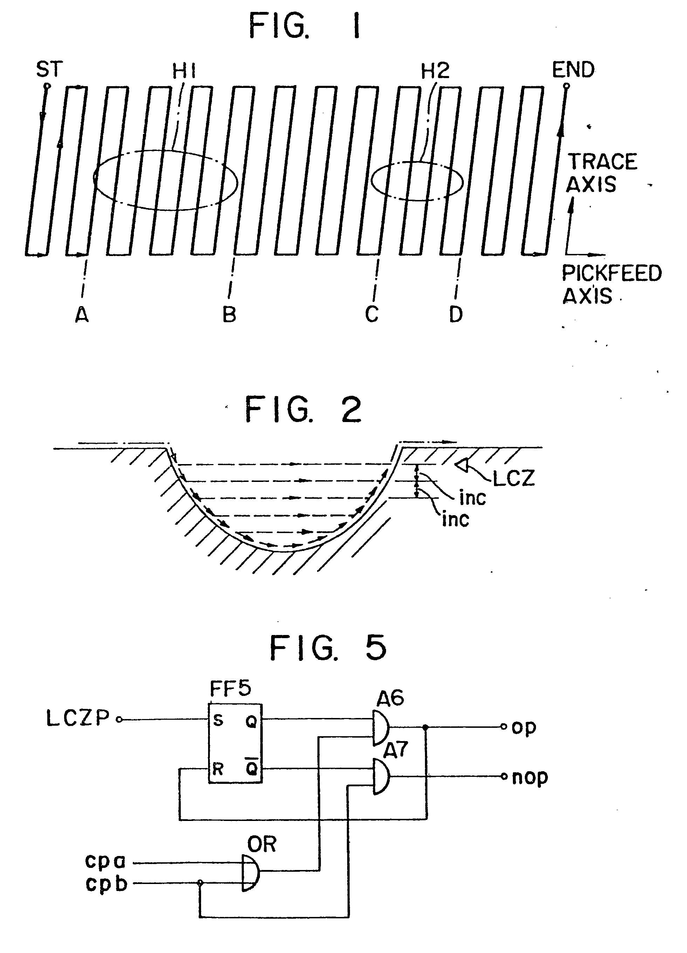

As illustrated in Fig. 1, in a case in which a tracing path is set to start at a point ST and end at a point END and includes clamping feed areas H1 and H2, a tracer head starting from the point ST is fed along the tracing path by successive repetitions of tracing feed and pick feed operations in the directions of arrows shown in the Figure (tracing feed takes place parallel to TRACE AXIS and pick feed takes place parallel to PICKFEED AXIS). In the course of tracing feed from point A, when the mechanical position of the tracer head falls below a clamp level, claming feed takes place. In an embodiment of this invention the position along the pick feed axis (PICKFEED AXIS) at which clamping feed is first carried out, point A, is stored in a memory. Thereafter, when the tracer head reaches point B after subsequent tracing feeds, clamping feeds and pick feeds, the mechanical position of the tracer head no longer falls below the clamp level during tracing feed, so that no clamping feed takes place, and this position along the pick feed axis, point B, is also stored in the memory. Reversing the direction of pick feed at the point B and changing the clamp level, tracing is then effected in reverse, towards point A. When the point A is again reached a further reversal of the direction of pick feed and a change of clamp level are effected and tracing towards point B is again carried out; in this way, tracing between the points A and B is performed repeatedly until, in the course of tracing between A and B, no clamping feed takes place or until the clamp level reaches an end level.

Fig. 2 shows a schematic cross-sectional view taken in a direction parallel to the TRACE AXIS of Fig. 1, illustrating clamping levels set when a tracing path crosses a clamping feed area. Clamp level is set at an initial value LCZ for a first tracing across the clamping feed area and is varied by an increment inc for each subsequent tracing after the first. Thus in each subsequent tracing clamping feed is performed at a new clamp level.

After tracing between the points A and B has been repeated until clamping feed is no longer required, reversal of pick feed direction does not occur when the point B is reached, and the clamp level is reset to the initial value LCZ. Tracing is then effected toward a point C. When the tracer head reaches point C clamping feed is carried out again, so that, in an embodiment of this invention, the point C is stored in the memory, and thereafter a point D at which clamping feed comes to an end is also stored. Then profile working takes place repeatedly between the points C and D.

In conventional profile working, clamping tracer control along the path from ST to END in Fig. 1 would be performed repeatedly each repeat running the whole way between the start and end points ST and END. In an embodiment of this invention, however, clamping tracer control is carried out repeatedly only between the points A and B and between the points C and D where the areas H1 and H2 exist respectively, and the tracer control is performed once only between the start point ST and the point A, between the points B and C, and between the point D and the end point END.

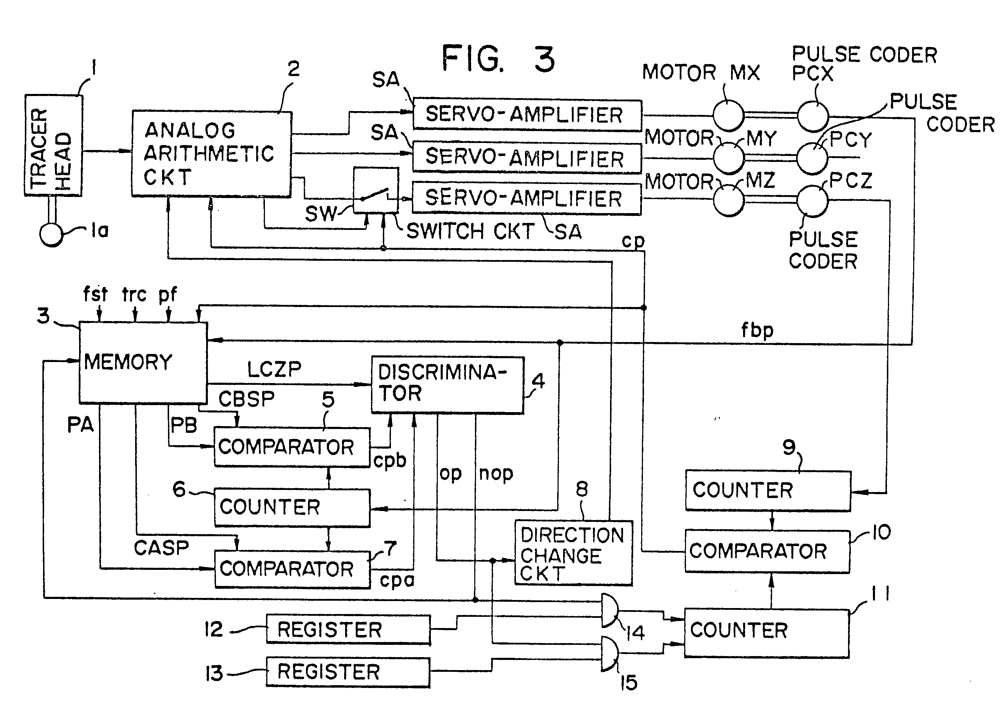

Fig. 3 is a block diagram of apparatus embodying this invention, illustrating principal parts employed for effecting tracer control as described above.

The apparatus of Fig. 3 comprises a tracer head 1 equipped with a stylus 1a which makes contact with a model surface with the apparatus is in use; an analog arithmetic circuit 2; a memory 3; a discriminator 4; comparators 5, 7 and 10; current position counter 6; a direction change circuit 8; a Z-axis current position counter 9; a clamp level set counter 11; a register 12 for setting an initial clamping level; a register 13 for setting an increment of the clamp level; AND circuits 14 and 15; a switching circuit SW; servo-amplifier SA; motors MX, MY and MZ; and position detectors, for example resolvers or pulse coders, PCX, PCY and PCZ.

In the following description the position detectors PCX, PCY and PCZ will be taken to be pulse coders, which are respectively coupled with the motors MX, MY and MZ.

The motors MX, MY and MZ are provided for driving along a pick feed axis, a tracing axis and the Z-axis respectively. The switching circuit SW is turned OFF by a clamping feed signal $cp$ to stop driving of the motor MZ, permitting clamping feed to take place; and the switching circuit SW is turned ON by a displacement signal from the tracer head 1.

The memory 3 receives a clamping feed signal $cp$, a pick feed signal $pf$, a tracing feed signal $trc$, a first-tracing signal $fst$, a clamping-feed-non-operation discriminated signal $nop$ from the discriminator 4, and feedback pulses $fbp$ relating to the pick feed axis from the pulse coder PCX, and the memory 3 outputs a position-A signal PA, a position-B signal PB, a signal CASP from a position-A counter (see below), a signal CBSP from a position-B counter (see below) and a clamping feed operation signal LCZP.

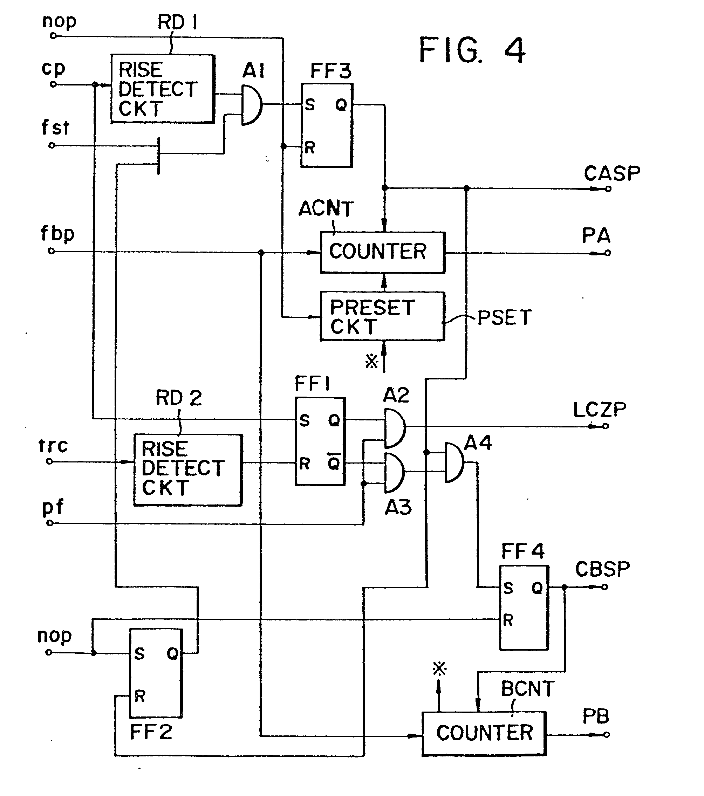

Fig. 4 shows in block form principal parts of the memory 3.

In Fig. 4, FF1 to FF4 are flip-flops; RD1 and RD2 are rise detect circuits; A1 to A4 are AND circuits; ACNT and BCNT are position-A and position-B counters respectively; and PSET is a preset circuit.

When the flip-flop FF3 outputs "1" at its terminal Q, the position-A counter ACNT stops counting feedback pulses *fbp* and outputs the position-A signal PA, and when the flip-flops FF4 outputs "1" at its terminal Q, the position-B counter BCNT stops counting feedback pulses *fbp* and outputs the position-B signal PB. When clamping feed is performed, the flip-flop FF1 is set by the clamping feed signal *cp*, and in response to the next pick feed signal *pf*, the clamping feed operation signal LSZP becomes "1".

The discriminator 4 comprises a flip-flop FF5, AND circuits A6 and A7 and an OR circuit OR, as depicted in Fig. 5. The flip-flop FF5 is set by the clamping feed operation signal LCZP. A clamping feed operation discriminated signal *op* whose value indicates whether the flip-flop FF5 has been set or not, or a clamping-feed-non-operation discriminated signal *nop*, is derived from the AND circuit A6 or A7 when a coincidence signal *cpa* or *cpb* is applied thereto from comparator 7 or comparator 5. The flip-flop FF5 is reset when the clamping feed operation discriminated signal *op* is provided.

When commencing tracing operations from the start point ST of the tracing path shown in Fig. 1, an initial value of the clamp level is set in the clamp level set counter 11, by a non-illustrated arrangement, from the register 12 which has set therein the initial value of the clamp level, and the switching circuit SW is held in the ON state due to the fact that the clamping feed signal *cp* is "0". The first-tracing signal *fst* is delivered to the memory 3, and in response to the output from the analog arithmetic circuit 2, the motor MY is driven to perform tracing feed.

The stylus 1*a* makes contact with a model (not shown), and a displacement signal varying with the model configuration along the tracing path is applied from the tracer head 1 to the analog arithmetic circuit 2 to drive the motor MZ in accordance with the displacement signal. The pulse coder PCZ coupled with the motor MZ applies pulses to the Z-axis current position counter 9, whose count content represents current position along the Z-axis.

When tracing reaches a pick feed position, driving of the motor MY is halted and the motor MX is driven to effect pick feed. Pulses from the pulse coder PCX coupled with the motor MX are delivered as the feedback pulses *fpb* to the memory 3 and the current position counter 6, and the count content of the current position counter 6 is applied to the comparators 5 and 7. In the memory 3, the feedback pulses *fbp* are delivered to the position-A and position-B counters ACNT and BCNT. Accordingly, the count contents of the position-A and position-B counters ACNT and BCNT represent positions along the pick feed axis.

When tracing feed and the pick feed have been repeated alternately to reach point A in Fig. 1, the mechanical position of the stylus 1*a* will fall below the clamp level in subsequent tracing. That is, the count content of the Z-axis current position counter 9 and the initial value of the clamp level set in the clamp level set counter 11 will coincide with each other, and comparator 10 will output the clamping feed signal *cp*. The clamping feed signal *cp* turns the switching circuit SW ON to stop the motor MZ and perform clamping feed.

The clamping feed signal *cp* is also delivered to the memory 3, wherein its rise from "0" to "1" is detected by the rise detect circuit RD1, setting the flip-flop FF3 *via* the AND circuit A1. Further, the flip-flop FF1 is set by the clamping feed signal *cp*. The flip-flop FF1 is reset in response to the detection of the rise of the tracing feed signal *trc* from "0" to "1" by the rise detect circuit RD2.

When the flip-flop FF3 is set to provide an output "1" at its terminal Q, the signal CASP is output, and the position-A counter ACNT stops counting feedback pulses *fbp* and stores and holds the position A, while the flip-flop FF2 is reset.

Upon application of the next pick feed signal *pf*, the AND circuits A2 and A3 are opened, and if the flip-flop FF1 is set, the clamping feed operation signal LCZP is output to set the flip-flop FF5 of the discriminator 4.

When clamping feed and pick feed have been repeated alternately in the course of tracing feed and the point B in Fig. 1 has been reached, since no clamping feed is carried out during the tracing feed immediately before point B is reached, the flip-flop FF1 remains reset, and the next pick feed signal *pf* sets the flip-flop FF4 *via* the AND circuits A3 and A4, to provide the signal CBSP and a counting stop signal for the position-B counter BCNT. As a consequence, the position-B counter BCNT stops counting feedback pulses *fbp* and stores and holds the position B and applies the position-B signal PB to the comparator 5. At this moment, the count contents of the current position counter 6 and the position-B counter BCNT are the same, so that the coincidence signal *cpb* is provided to the discriminator 4. Since the flip-flop FF5 is held in its set state, the clamping feed operation discriminated signal *op* is output. The signal *op* is fed to the direction change circuit 8 to cause it to apply a pick feed direction change signal to the analog arithmetic circuit 2, reversing the direction of pick feed by the motor MX. Further, the AND circuit 15 is opened, through which an increment from the register 13 is added to the initial value of the clamp level set counter 11.

When tracing has reached point A, from point B, the content stored in the point-A counter ACNT and the content of the current position counter 6 coincide with each other, so that the coincidence signal *cpa* is delivered from the comparator 7 to the discriminator 4. The discriminator 4 applies the clamping feed operation discriminated signal *op* to the direction change circuit 8, which provides a pick feed direction change signal to the analog arithmetic circuit 2 to reverse the direction of pick feed, and the flip-flop FF5 is reset by the discriminator 4. Further, the content of the register 13 is added to the counter 11 to set a new clamp level.

By repetition of such operations as are described above, tracing is carried out between points A and B; and when clamping feed is no longer effected during tracing from point A to B (the flip-flop FF5 then being in the reset state when tracing reaches the point B), the coincidence signal *cpb* is supplied from the comparator 5 to the discriminator 4 to derive therefrom the clamping-feed-non-operation discriminated signal *nop*. This signal *nop* opens the AND circuit 14, through which the initial value of the clamp level stored in the register 12 is again set in the clamp level set counter 11. The clamping-feed-non-operation discriminated signal *nop* is also applied to the memory 3 to set the flip-flop FF2 and preset circuit PSET, and the content of the position-B counter BCNT is thereby preset in the position-A counter ACNT. As a consequence, the position-A and position-B counters ACNT and BCNT and the current position counter 6 become equal in content to each other, and the feedback pulses *fbp* generated by the pick feed are again counted.

When tracing reaches point C in Fig. 1, the point C at which clamping feed is again performed is stored in the counter ACNT as was the case for point A, and point D is also stored in the counter BCNT as was the case for point B. Tracing is carried out repeatedly between the points C and D and the clamp level is changed for each tracing. When clamping feed no longer effected in the course of tracing between C and D tracing then takes place from point D to the end point END, where the tracer control is coupled.

The position-A and position-B counters ACNT and BCNT may be constituted by other storage means, for example, semiconductor memories, to store positions at which clamping feed is first performed and positions at which clamping feed is no longer carried out.

As has been described in the foregoing, tracer control apparatus embodying the present invention is provided with first and second memory means such as the position-A and the point-B counters ACNT and BCNT of Fig. 3, and clamp level set means such as the clamp level set counter 11 of Fig. 3. Between the position where the clamping feed is performed first, for example, point A, and the position where the clamping feed is no longer performed, for example, point B, tracing is repeated with the clamp level being changed for each tracing. When clamping feed is no longer performed between A and B, the clamp level is reset to its initial value to permit tracing to proceed to a next clamping feed area (if any). In areas where the initial value of the clamp level is not attained, tracing takes place once only, and only in areas where the clamping feed is performed is tracing repeated until in an ultimate tracing the clamp level applying to that tracing is not reached. Thus, a reduction in waste and hence enhanced efficiency can be provided in profile working.

Thus, in tracer machining with which the invention is concerned tracing feed and pick feed are performed alternately and clamping feed is effected at a preset clamp level. Between a first position where clamping feed is carried out first and a second position where clamping feed is no longer performed, tracing is repeated, back and forth between those positions, changing the clamp level sequentially for each tracing. When clamping feed is no longer carried out in a repeat tracing between those positions the clamp level is set back to an initial value and tracing and pick feed beyond the second position are carried out.

**Claims**

1. Tracer control apparatus, for a tracer machining system operable to effect tracing by tracing feeds and pick feeds and to effect clamping feeds at a preset clamping level, characterised by

memory means (3) for storing a first position (A, C) along the pick feed axis, which position corresponds to the first of a succession of tracing feeds in the course of each of which clamping feed is effected in an initial tracing, and for storing a second position (B, D) along the pick feed axis, which position corresponds to a tracing feed, following next after the last tracing feed of the succession, in the course of which clamping feed is not effected,

means (4 to 8) operable in dependence upon the first (A, C) and second (B, D) positions as stored in the memory means (3) to cause tracing between the first (A, C) and second (B, D) positions to be repeated, back and forth between those positions, and

clamping level setting means (11 to 15) for setting an initial clamping level (LCZ) in respect of the initial tracing from the first (A, C) to the second (B, D) position, and for changing the clamping level for respective subsequent repeat tracings between the first (A, C) and second (B, D) positions until, in such a repeat tracing, clamping feed is not effected at the changed clamping level set for that tracing or a limit clamping level value is reached, whereafter the innitial clamping level (LCZ) is set once more, and tracing proceeds beyond the second position (B, D).

2. Apparatus as claimed in claim 1, further comprising a counter (ACNT, BCNT) arranged for counting pulses (fbp) from the pick-feed axis position detector (PCX) of the system, wherein the memory means (3) are operable to store the first (A, C) and second (B, D) positions in terms of the counts (PA, PB) reached by the counter (ACNT, BCNT) for those positions, the count (PA) corresponding to the first position (A, C) being entered into the memory (3) in response to the occurrence of clamping feed, in the first of the succession of tracing feeds, and the count (PB) corresponding to the second position (B, D) being entered into the memory (3) in response to the absence of clamping feed in the next tracing feed after the last of the succession.

3. Apparatus as claimed in claim 1 or 2, wherein the clamping level setting means (11 to 15) comprise a first register (12) holding the initial clamping level (LCZ), a second register (13) holding a clamping level increment (inc), and a clamping level setting counter (11) operable to derive the changed clamping levels for each of the said respective subsequent repeat tracings by adding the said increment (inc) to the clamping level applicable to the last preceding tracing.

4. A method of machining in a tracer machining system that is operable to effect tracing by tracing feeds and pick feeds and to effect clamping feeds at a preset clamping level, characterised in that the method comprises:

in an initial tracing, storing a first position (A, C) along the pick feed axis which position corresponds to the first tracing feed of a succession of tracing feeds in which clamping feed is effected, and storing a second position (B, D) along the pick feed axis which position corresponds to a tracing feed, following next after the last tracing feed of the succession, in the course of which clamping feed is not effected,

in dependence upon the stored positions (A, C; B, D), executing repeat tracings back and forth between those positions,

in respective such repeat tracings after the initial tracing, changing the clamping level from an initial clamping level (LCZ) value applicable to the initial tracing, until in such a repeat tracing clamping feed is not effected at the changed clamping level set for that tracing or a limit clamping level value is reached,

then, setting the initial clamping level (LCZ) once more and tracing beyond the second position (B, D).

## Revendications

1. Dispositif de commande d'un palpeur, pour un système d'usinage à palpeur qu'on peut faire fonctionner de façon à effectuer un palpage par des avances de palpage et des avances de décalage et à effectuer des avances à limitation à un niveau de limitation fixé à l'avance, caractérisé par

des moyens de mémoire (3) destinés à enregistrer une première position (A, C) le long de l'axe d'avance de décalage, cette position correspondant à la première avance parmi une succession d'avances de palpage au cours de chacune desquelles une avance à limitation est effectuée dans un palpage initial, et à enregistrer une seconde position (B, D) le long de l'axe d'avance de décalage, cette position correspondant à une avance de palpage suivant immédiatement la dernière avance de palpage de la succession au cours de laquelle l'avance à limitation n'est pas effectuée,

des moyens (4 à 8) qu'on peut faire fonctionner sous la dépendance des première (A, C) et seconde (B, D) positions, enregistrées dans les moyens de mémoire (3), pour provoquer la répétition du palpage entre les première (A, C) et seconde (B, D) positions, dans des directions alternées entre ces positions, et

des moyens de fixation de niveau de limitation (11 à 15) destinés à fixer un niveau de limitation initial (LCZ) en ce qui concerne le palpage initial de la première position (A, C) vers la seconde position (B, D), et à changer le niveau de limitation pour des palpages répétés suivants respectifs entre les première (A, C) et seconde (B, D) positions, jusqu'à ce que, dans un tel palpage répété, l'avance à limitation ne soit pas effectuée au niveau de limitation changé qui est fixé pour ce palpage, ou jusqu'à ce qu'une valeur limite du niveau de limitation soit atteinte, après quoi le niveau de limitation initial (LCZ) est fixé à nouveau, et le palpage se poursuit au-delà de la seconde position (B, D).

2. Dispositif tel que revendiqué dans la revendication 1, comprenant en outre un compteur (ACNT, BCNT) conçu pour compter des impulsions (fbp) provenant du détecteur de position de l'axe de décalage (PCX) du système, dans lequel les moyens de mémoire (3) sont capables d'enregistrer les première (A, C) et seconde (B, D) positions sous la forme des comptes (PA, PB) atteints par le compteur (ACNT, BCNT) pour ces positions, le compte (PA) correspondant à la première position (A, C) étant introduit dans la mémoire (3) sous l'effet de l'apparition de l'avance à limitation, dans la première avance parmi la succession d'avances de palpage, et le compte (PB) correspondant à la seconde position (B, D) étant introduit dans la mémoire (3) sous l'effet de l'absence d'avance à limitation dans l'avance de palpage suivante, après la dernière de la succession.

3. Dispositif tel que revendiqué dans la revendication 1 ou 2, dans lequel les moyens de fixation de niveau de limitation (11 à 15) comprennent un premier registre (12) conservant le niveau de limitation initial (LCZ), un second registre (13) conservant un incrément de niveau de limitation (inc), et un compteur de fixation de niveau de limitation (11) qu'on peut faire fonctionner de façon à obtenir les niveaux de limitation changés pour chacun des palpages répétés suivants respectifs, en additionnant ledit incrément (inc) au niveau de limitation applicable au dernier palpage précédent.

4. Un procédé d'usinage dans un système d'usinage à palpeur qu'on peut faire fonctionner de façon à effectuer un palpage par des avances de palpage et des avances de décalage, et à effectuer des avances à limitation à un niveau de limitation fixé à l'avance, ce procédé étant caractérisé en ce qu'il comprend les opérations suivantes:

dans un palpage initial, on enregistre une première position (A, C) le long de l'axe d'avance de décalage, cette position correspondant à la première avance de palpage d'une succession d'avances de palpage dans lesquelles l'avance à limitation est effectuée, et on enregistre une seconde position (B, D) le long de l'axe d'avance de décalage, cette position correspondant à une avance de palpage suivant immédiatement la dernière avance de palpage de la succession, au cours de laquelle l'avance à limitation n'est pas effectuée;

sous la dépendance des positions enregistrées (A, C; B, D), on exécute des palpages répétés dans directions alternées entre ces positions,

pendant de tels palpages répétés respectifs après le palpage initial, on change le niveau de limitation à partir d'une valeur de niveau de limitation initial (LCZ) applicable au palpage initial, jusqu'à ce qu'une telle avance à limitation pour le palpage répété ne soit pas effectuée au niveau de limitation changé qui est fixé pour ce palpage, ou jusqu'à ce qu'une valeur limite de niveau de limitation soit atteinte,

puis on fixe à nouveau le niveau de palpage initial (LCZ) et on effectue le palpage au-delà de la seconde position (B, D).

**Patentansprüche**

1. Nachformsteuerung für ein Nachformbearbeitungssystem, um ein Nachformen durch Fühl-vorschub und Leitvorschub durchzuführen und Zeilenvorschübe mit einer vorbestimmten Zeilenhöhe vorzunehmen, gekennzeichnet durch.

Speichermittel (3), um eine erste Stellung (A, C) auf einer Leitvorschubachse zu speichern, die einer ersten aus einer Serie von Fühl-vorschüben entspricht bei dem bei jedem von ihnen ein Zeilenvorschub bei einer Eingangsfühlerstellung durchgeführt wird und um eine zweite Stellung (B, D) auf der Leitvorschubachse zu speichern, die einem Fühl vorschub entspricht, der als nächster nach dem letzten Fühlvorschub der Serie folgt, bei dem kein Zeilenvorschub erfolgt;

Mittel (4—8), die in Abhängigkeit von der ersten (A, C) und der zweiten (B, D) Einstellung, die im Speicher (3) gespeichert sind, betätigbar sind, um Fühl vorschübe zwischen der ersten (A, C) und zweiten (B, D) Einstellung zurück und vorwärts zwischen diesen beiden Stellungen zu wiederholen;

Einstellmittel (11—15) zur Einstellung des Zeilenniveaus (LCZ) für den Fühl schub von der ersten (A, C) zur zweiten (B, D) Stellung und um das Zeilenniveau für allfällige nachfolgende Wiederholungs- Fühl-vorschübe zwischen der ersten (A, C) und der zweiten (B, D) Stellung zu verändern, bis bei einem wiederholten Fühlvorschübe ein Zeilenvorschub bei einem solchen veränderten Zeilenvorschub, der für den Fühl-vorschub festgelegt ist, oder bis ein Grenz-Zeilenniveau erreicht ist nicht mehr ausgeführt wird, worauf das Eingangs-Zeilenniveau (LCZ) erneut eingestellt wird und die Nachformung jenseits der zweiten Stellung (B, D) beginnt.

2. Steuerung nach Anspruch 1, die weiterhin ein Zählwerk (ACNT, BCNT) enhält, das Impulse (fbp) zählt, die von einem die Stellung der Leitachse messenden Detektor (PCX) des Systems ausgehen, worin der Speicher (3) betätigbar ist, um die ersten (A, C) und zweiten (B, D) Stellungen in Zahlen (PA, PB), die das Zählwerk (ACNT, BCNT) für diese Stellungen erreichen, zu speichern, wobei die Zahl (PA) der ersten in den Speicher (3) eingeführten Stellung (AC) als Reaktion auf das Auftreten eines Zeilenvorschubs beim ersten Fühl-vorschub der Serie entspricht und die Zahl (PB) für die zweite Stellung (B, D) als Reaktion auf das Fehlen eines Zeilenvorschubs bei dem letzten Fühl-vorschub des der Serie folgenden Fühl-vorschubs in den Speicher (3) eingeführt wird.

3. Steuerung nach Anspruch 1 oder 2 gekennzeichnet durch Mittel (11—15) zum Einstellen des Zeilenvorschubs, die ein erstes Register (12), das das Eingangsniveau (LCZ) enthält, ein zweites Register (13), das einen Zeilenniveauzuwachs (inc) und ein Zählwerk (11) aufweisen, um das Zeilenniveau einzustellen, das einsetzbar ist, um die geänderten Zeilenniveaus für jeden der aufeinander folgenden wiederholten Fühl vorschübe zu erfassen, indem der Zuwachs (inc) zum für den vorhergehenden Fühl-vorschub geltenden Niveau addiert wird.

4. Verfahren zur Bearbeitung mittels eines Nachformbearbeitungssystems, um eine Nachformung durch Fühl-vorschub und Leitvorschub auszuführen und um Zeilenvorschübe mit einer vorbestimmten Zeilenhöhe zu verwirklichen, dadurch gekennzeichnet, daß das Verfahren die folgenden Schritte aufweist:

bei einem Eingangsfühl-vorschub wird eine erste Stellung (A, C) bezüglich der Leitvorschubachse gespeichert, wobei diese Stellung einem ersten Fühl-vorschub aus einer Serie von fühl-vorschüben entspricht innerhalb der ein Zeilenvorschub durchgeführt wird, und es wird eine zweite Stellung (B, D) bezüglich der Leitvorschubachse gespeichert, die einem Fühl-vorschub entspricht, der dem letzten Fühlervorschub der Serie folgt, bei dem ein Zeilenvorschub nicht durchgeführt wurde;

in Abhängigkeit von den gespeicherten Stellungen (A, C; B, D) werden wiederholte Fühl-vorschübe zurück und hin zwischen diesen beiden Stellungen durchgeführt;

Im Verfolg solcher wiederholter Fühl-vorschübe im Anschluß an den Eingangs-Fühl-vorschub wird das Zeilenniveau von einem Eingangsniveau (LCZ), das für den Eingangsfühl vorschub gilt, so lange geändert bis bei den wiederholten Fühl vorschüben ein Zeilenvorschub für die vorbestimmten Fühl-vorschübe nicht mehr verwirklicht wird oder bis ein Grenzwert des Zeilenvorschubs erreicht ist;

sodann wird das Eingangszeilenniveau für die Nachformung jenseits der zweiten Stellung (B, D) erneut eingestellt.

**0014563**

# FIG. 1

# FIG. 2

# FIG. 5

FIG. 3

0014 563

FIG. 4

3